# EUROPÄISCHE PATENTSCHRIFT

(11) **EP 1 307 333 B1**
(45) Veröffentlichungstag und Bekanntmachung des Hinweises auf die Patenterteilung: **14.04.2004**
(21) Anmeldenummer: 01956417.8
(22) Anmeldetag: 28.07.2001
(51) Int. Cl.: B29C 70/06, B29B 9/14, B29B 15/10, B29C 70/50, B29C 70/46

(54) **VERFAHREN ZUM HERSTELLEN VON THERMOPLASTISCH GEBUNDENEM NATURFASERMATERIAL IN SCHÜTT- UND RIESELFÄHIGER FORM**
METHOD FOR THE PRODUCTION OF NATURAL FIBRE MATERIAL IN A POURABLE AND DISPENSABLE FORM BONDED WITH A THERMOPLASTIC
PROCEDE DE PREPARATION DE MATIERE A FIBRES NATURELLES A LIAISON THERMOPLASTIQUE, SOUS UNE FORME OU ELLE PEUT ETRE DEVERSEE ET S'ECOULER

(30) Priorität: 07.08.2000 DE 10038405
(43) Veröffentlichungstag der Anmeldung: 07.05.2003
(73) Patentinhaber: Möller Plast GmbH, 33649 Bielefeld (DE)
(72) Erfinder: BECKMANN, Friedhelm, 32120 Hiddenhausen (DE)
(74) Vertreter: Schirmer, Siegfried, Dipl.-Ing.
(86) Internationale Anmeldenummer: PCT/DE2001/002898
(87) Internationale Veröffentlichungsnummer: WO 2002/011976

(56) Entgegenhaltungen:
- WO-A-94/02673
- DE-A- 3 614 533
- DE-A- 19 711 247

## Beschreibung

Die Erfindung betrifft ein Verfahren zum Herstellen von thermoplastisch gebundenem Naturfasermaterial in schütt- und rieselfähiger Form. Die Erfindung betrifft ferner ein Verfahren zum Herstellen eines naturfaserverstärkten Bauteils, bei dem ein plastifizierter, thermoplastischer, synthetischer oder biologischer Basiswerkstoff mit Naturfasern homogen vermischt wird.

Bei der Herstellung von naturfaserverstärkten Bauteilen können Fasern mit einer Länge von 2 bis 15 mm nach dem Stand der Technik gemäß DE-A-19 711 247 nur dadurch eingebracht werden, daß zunächst aus einem Kardenband durch Verdrillen ein fadenförmiger Ausgangswerkstoff hergestellt wird, der anschließend durch ein Schmelzebad einer Kunststoffschmelze läuft oder in einen Extruder eingezogen wird und dort mit einer thermoplastischen Schmelze ummantelt wird. Nach Abkühlung wird das verfestigte Material anschließend durch ein Schneidwerk auf eine gewünschte Länge gebracht, so daß es in schütt- und rieselfähiger Form vorliegt. Diese Einzelabläufe sind aufwendig und kostenträchtig.

Die Aufgabe der Erfindung besteht darin, ein Verfahren anzugeben, mit dem es möglich ist, Naturfasern und einen thermoplastischen Basiswerkstoff so miteinander zu verbinden, daß eine schütt- und rieselfähige Form erhalten wird. Weiterhin besteht die Aufgabe der Erfindung darin, ein Verfahren zum Herstellen eines naturfaserverstärkten Bauteils anzugeben, bei dem die Naturfasern problemlos in einen Basiswerkstoff eingemischt werden können.

Diese Aufgabe wird erfindungsgemäß durch ein Verfahren zum Herstellen von thermoplastisch gebundenem Naturfasermaterial in schütt- und rieselfähiger Form gelöst, wobei Naturfasern mit einem fadenförmigen Thermoplastmaterial homogen vermischt werden, die Mischung mattenförmig flächig ausgebracht und durch Energiezufuhr, bis zur Schmelz- oder Erweichungstemperatur des Thermoplastmaterials erwärmt wird, so daß eine Verbindung zwischen Naturfasern und Thermoplastmaterial eintritt, und die verfestigte Mischung nach Abkühlung auf eine gewünschte Größe geschnitten bzw. zerkleinert wird.

Es kann vorgesehen sein, daß die mattenförmige Mischung während und/oder nach dem Erwärmen verdichtet wird, um eine festere Verbindung zu erreichen.

Die Mischung kann in Stücke mit einer Größe von etwa 1 mm bis 15 mm, bevorzugt etwa 3 mm bis 10 mm zerkleinert werden.

Das Thermoplastmaterial kann ein synthetischer Kunststoff oder ein biologischer Werkstoff wie Lignin oder PHP sein.

Um mit einem möglichst geringen Thermoplastmaterialgehalt auszukommen, hat es sich als günstig herausgestellt, wenn der Durchmesser des fadenförmigen Thermoplastmaterials im Bereich von etwa 0,1 µm bis 100 µm und bevorzugt zwischen etwa 1 µm und 50 µm liegt.

Die Länge des fadenförmigen Thermoplastmaterials kann zwischen etwa 0,5 mm und 30 mm, bevorzugt zwischen etwa 0,5 mm und 20 mm liegen. Es kann vorgesehen sein, daß die Länge des Thermoplastmaterials zwischen etwa 0,5 mm und 10 mm und bevorzugt zwischen etwa 0,5 mm und 3 mm liegt.

Die Naturfasern, die eine Ausgangslänge von etwa 20 bis 120 mm haben können, weisen bevorzugt eine Länge von zwischen etwa 0,5 mm und 25 mm auf, weiter bevorzugt zwischen etwa 0,5 mm und 10 mm und weiter bevorzugt zwischen etwa 3 mm und 10 mm.

Obwohl grundsätzlich beliebige Mischungsverhältnisse zwischen Naturfasern und fadenförmigem Thermoplastmaterial denkbar sind, beträgt der Anteil der Naturfasern an der Mischung vorzugsweise mehr als 50%, bevorzugt mehr als 60%, und weiter bevorzugt mehr als 70%. Es kann vorgesehen sein, daß der Anteil der Naturfasern an der Mischung mehr als 80%, bevorzugt mehr als 90% und weiter bevorzugt mehr als 95% beträgt.

Das vorab hergestellte mattenförmige Material kann in relativ großen Breiten und Schichtstärken hergestellt werden, so daß die Herstellung großer Materialmengen wirtschaftlich möglich ist. Die verfestigte Matte wird mit einer Schneideinrichtung oder einer Schneidmühle auf die gewünschte Länge einzelner Teilchen geschnitten bzw. zerkleinert. Das so hergestellte Material ist schütt- und rieselfähig und kann von Scluzeckensystemen der Kunststoffverarbeitungsmaschinen (Spritzgieß-, Extrusionsund Extrusionsblasmaschinen) problemlos eingezogen werden.

In Ausgestaltung der Erfindung kann vorgesehen sein, daß den Naturfasern ein Zusatzmaterial in Form von Schäben, bevorzugt aus Flachs, Hanf und/oder Kenaf, und/oder in Form holziger Bestandteile von Chinaschilf, zugemischt wird. Es kann vorgesehen sein, daß die Schäben bzw. die holzigen Bestandteile des Chinaschilfs vorab zerkleinert werden, z.B. auf eine Länge, die der Länge der zerkleinerten Naturfasern entspricht.

Da die Schäben bzw. die holzigen Bestandteile von Chinaschilf eine geringere Festigkeit als das Fasermaterial aufweisen, andererseits aber deutlich preiswerter sind, kann durch beliebige Mischungsverhältnisse entweder ein kostengünstiges Material mit reduzierten Festigkeitseigenschaften oder ein teureres Material mit besseren mechanischen Eigenschaften hergestellt werden. Bevorzugt ist vorgesehen, daß das Verhältnis von Zusatzmaterial zu Naturfasern bis zu 10:1 beträgt.

Als Schäben werden bevorzugt sogenannte Grünschäben eingesetzt, die aus Materialien gewonnen werden, bei denen das Vorprodukt Stroh nur wenige Tage, insbesondere fünf bis acht Tage, auf dem Feld verbleibt. Hierdurch bleibt die ursprüngliche Festigkeit der Schäben weitestgehend erhalten.

Bei der Herstellung des gebundenen Naturfasermaterials kann anstatt eine thermoplastischen Kunststoffs auch ein biologischer Werkstoff eingesetzt werden, so daß ein vollbiologischer Materialaufbau erzielt wird und das Material recyclebar und sogar kompostierbar ist.

Die Erfindung betrifft ferner ein Verfahren zum Herstellen eines naturfaserverstärkten Bauteils, bei dem ein plastifizierter, thermoplastischer, synthetischer oder biologischer Basiswerkstoff mit Naturfasern homogen vermischt wird wobei erfindungsgemäß hergestelltes thermoplastisch gebundenes Naturfasermaterial in den thermoplastischen Basiswerkstoff eingemischt wird.

## Patentansprüche

1. Verfahren zum Herstellen von thermoplastisch gebundenem Naturfasermaterial in schütt- und rieselfähiger Form wobei Naturfasern mit einem fadenförmigen Thermoplastmaterial homogen vermischt werden, **dadurch gekennzeichnet, daß** die Mischung mattenförmig flächig ausgebracht und durch Energiezufuhr bis zur Schmelz- oder Erweichungstemperatur des Thermoplastmaterials erwärmt wird, so daß eine Verbindung zwischen Naturfasern und Thermoplastmaterial eintritt, und die verfestigte Mischung nach Abkühlung auf eine gewünschte Größe geschnitten bzw. zerkleinert wird.

2. Verfahren nach Anspruch 1, **dadurch gekennzeichnet, daß** die mattenförmige Mischung während und/oder nach dem Erwärmen verdichtet wird.

3. Verfahren nach Anspruch 1 oder 2, **dadurch gekennzeichnet, daß** die Mischung in Stücke mit einer Größe von etwa 1 mm bis 15 mm, bevorzugt etwa 3 mm bis 10 mm zerkleinert wird.

4. Verfahren nach einem der vorangehenden Ansprüche, **dadurch gekennzeichnet, daß** das Thermoplastmaterial ein synthetischer Kunststoff oder ein biologischer Werkstoff wie Lignin oder PHP ist.

5. Verfahren nach einem der vorangehenden Ansprüche, **dadurch gekennzeichnet, daß** das fadenförmige Thermoplastmaterial einen Durchmesser im Bereich von etwa 0,1 µm bis 100 µm, bevorzugt etwa 1 µm bis 50 µm aufweist.

6. Verfahren nach einem der vorangehenden Ansprüche, **dadurch gekennzeichnet, daß** das fadenförmige Thermoplastmaterial eine Länge von etwa 0,5 mm bis 30 mm, bevorzugt etwa 0,5 mm bis 20 mm aufweist.

7. Verfahren nach einem der Ansprüche 1 bis 5, **dadurch gekennzeichnet, daß** das fadenförmige Thermoplastmaterial eine Länge von etwa 0,5 mm bis 10 mm, bevorzugt etwa 3 mm bis 10 mm aufweist.

8. Verfahren nach einem der vorangehenden Ansprüche, **dadurch gekennzeichnet, daß** die Naturfasern eine Länge von etwa 0,5 mm bis 30 mm, bevorzugt etwa 0,5 mm bis 10 mm und weiter bevorzugt zwischen etwa 3 bis 10 mm aufweisen.

9. Verfahren nach einem der vorangehenden Ansprüche, **dadurch gekennzeichnet, daß** der Anteil der Naturfasern an der Mischung mehr als 50%, bevorzugt mehr als 60% und weiter bevorzugt mehr als 70% beträgt.

10. Verfahren nach einem der Ansprüche 1 bis 8, **dadurch gekennzeichnet, daß** der Anteil der Naturfasern an der Mischung mehr als 80%, bevorzugt mehr als 90% und weiter bevorzugt mehr als 95% beträgt.

11. Verfahren nach einem der vorangehenden Ansprüche, **dadurch gekennzeichnet, daß** den Naturfasern ein Zusatzmaterial in Form von Schäben, bevorzugt aus Flachs, Hanf und/oder Kenaf, und/oder in Form von holzigen Bestandteilen von Chinaschilf, zugemischt wird.

12. Verfahren nach Anspruch 11, **dadurch gekennzeichnet, daß** das Verhältnis von Zusatzmaterial zu Naturfasern bis zu 10:1 beträgt.

13. Verfahren nach Anspruch 11 oder 12, **dadurch gekennzeichnet, daß** Grünschäben verwendet werden.

14. Verfahren zum Herstellen eines naturfaserverstärkten Bauteils, bei dem ein plastifizierter, thermoplastischer, synthetischer oder biologischer Basiswerkstoff mit Naturfasern homogen vermischt wird wobei nach dem Verfahren nach einem der vorangehenden Ansprüche hergestelltes thermoplastisch gebundenes Naturfasermaterial in den thermoplastischen Basiswerkstoff eingemischt wird.

## Claims

1. Method of producing thermoplastically bonded natural fibre material in pourable and flowable form, wherein natural fibres are homogeneously mixed with a threadlike thermoplastic material, **characterised in that** the mixture is produced in flat mat-shaped form and is heated by feed of energy up to the melting or softening temperature of the thermoplastic material, so that a connection between natural fibres and thermoplastic material arises and the solidified mixture is cut or reduced to a desired size after cooling.

2. Method according to claim 1, **characterised in that** the mat-shaped mixture is compressed during and/or after the heating.

3. Method according to claim 1 or 2, **characterised in that** the mixture is reduced to pieces with a size of approximately 1 mm to 15 mm, preferably approximately 3 mm to 10 mm.

4. Method according to one of the preceding claims, **characterised in that** the thermoplastic material is a synthetic plastics material or a biological material such as lignin or PHP.

5. Method according to one of the preceding claims, **characterised in that** the threadlike thermoplastic material has a diameter in the region of approximately 0.1 microns to 100 microns, preferably approximately 1 micron to 50 microns.

6. Method according to one of the preceding claims, **characterised in that** the threadlike thermoplastic material has a length of approximately 0.5 mm to 30 mm, preferably approximately 0.5 mm to 20 mm.

7. Method according to one of claim 1 to 5, **characterised in that** the threadlike thermoplastic material has a length of approximately 0.5 mm to 10 mm, preferably approximately 3 mm to 10 mm.

8. Method according to one of the preceding claims, **characterised in that** the natural fibres have a length of approximately 0.5 mm to 30 mm, preferably approximately 0.5 mm to 10 mm and more preferably between approximately 3 and 10 mm.

9. Method according to one of the preceding claims, **characterised in that** the proportion of natural fibres of the mixture amounts to more than 50%, preferably more than 60% and more preferably more than 70%.

10. Method according to one of claims 1 to 8, **characterised in that** the proportion of natural fibres of the mixture amounts to more than 80%, preferably more than 90% and more preferably more than 95%.

11. Method according to one of the preceding claims, **characterised in that** a supplementary material in the form of shives, preferably of flax, hemp and/or kenaf, and/or in the form of ligneous constituents of Chinese reed are admixed to the natural fibres.

12. Method according to claim 11, **characterised in that** the ratio of supplementary material to natural fibres is 10:1.

13. Method according to claim 11 or 12, **characterised in that** green shives are used.

14. Method of producing a component which is reinforced by natural fibres and in which a plasticised, thermoplastic, synthetic or biological basic material is homogeneously mixed with natural fibres, wherein thermoplastically bonded natural fibre material produced in accordance with the method according to one of the preceding claims is mixed into the thermoplastic basic material.

## Revendications

1. Procédé de fabrication de matière à fibres naturelles à liaison thermoplastique, sous une forme où elle peut être déversée et s'écouler, dans lequel des fibres naturelles sont mélangées de façon homogène à une matière thermoplastique filiforme,
**caractérisé en ce que**
le mélange est appliqué en nappe sous forme de matte et est réchauffé par apport d'énergie jusqu'à la température de fusion ou de ramollissement de la matière thermoplastique, de sorte que se crée une liaison entre les fibres naturelles et la matière thermoplastique, et le mélange solidifié après refroidissement est coupé ou réduit à une taille souhaitée.

2. Procédé selon la revendication 1,
**caractérisé en ce que**
le mélange sous forme de matte est densifié pendant et/ou après le réchauffement.

3. Procédé selon la revendication 1 ou 2,
**caractérisé en ce que**
le mélange est réduit en morceaux d'une dimension comprise entre environ 1 mm et 15 mm, de préférence entre environ 3 mm et 10 mm.

4. Procédé selon l'une quelconque des revendications précédentes,
**caractérisé en ce que**
la matière thermoplastique peut être une matière plastique synthétique ou un matériau biologique de type lignine ou PHP.

5. Procédé selon l'une quelconque des revendications précédentes,
**caractérisé en ce que**
le diamètre de la matière thermoplastique filiforme est compris entre environ 0,1 µm et 100 µm et de préférence entre environ 1 µm et 50 µm.

6. Procédé selon l'une quelconque des revendications précédentes,
**caractérisé en ce que**
la matière thermoplastique filiforme présente une longueur comprise entre environ 0,5 mm et 30 mm, de préférence entre environ 0,5 mm et 20 mm.

7. Procédé selon l'une des revendications 1 à 5,
**caractérisé en ce que**
la matière thermoplastique filiforme présente une longueur comprise entre environ 0,5 mm et 10 mm, de préférence entre environ 3 mm et 10 mm.

8. Procédé selon l'une quelconque des revendications précédentes,
**caractérisé en ce que**
les fibres naturelles présentent une longueur comprise entre environ 0,5 mm et 30 mm, de préférence entre environ 0,5 mm et 10 mm et de manière davantage préférée entre environ 3 et 10 mm.

9. Procédé selon l'une quelconque des revendications précédentes,
**caractérisé en ce que**
la portion de fibres naturelles dans le mélange représente plus de 50%, de préférence plus de 60% et de manière davantage préférée plus de 70%.

10. Procédé selon l'une quelconque des revendications 1 à 8,
**caractérisé en ce que**
la portion de fibres naturelles dans le mélange représente plus de 80%, de préférence plus de 90% et de manière davantage préférée plus de 95%.

11. Procédé selon l'une quelconque des revendications précédentes,
**caractérisé en ce qu'**
une matière complémentaire est mélangée aux fibres naturelles sous la forme de copeaux, de préférence en lin, en chanvre et/ou en kenaf, et/ou sous la forme de composants en bois de roseau de Chine.

12. Procédé selon la revendication 11,
**caractérisé en ce que**
le rapport entre la matière complémentaire et les fibres naturelles ne dépasse pas 10:1.

13. Procédé selon la revendication 11 ou 12,
**caractérisé en ce que**
des copeaux verts on utilise.

14. Procédé de fabrication d'un composant renforcé par des fibres naturelles dans lequel une matière de base plastifiée, thermoplastique, synthétique ou biologique est mélangée de façon homogène aux fibres naturelles, moyennant quoi la matière à fibres naturelles à liaison thermoplastique fabriquée selon l'une des revendications précédentes est mélangée dans la matière de base thermoplastique.
